# EUROPEAN PATENT SPECIFICATION

(11) **EP 2 812 892 B1**
(45) Date of publication and mention of the grant of the patent: **25.03.2020**
(21) Application number: 13705232.0
(22) Date of filing: 06.02.2013
(51) Int. Cl.: G09F 1/02, G09F 27/00

(54) **PRINTED ARTICLE FOR WIRELESS COMMUNICATION WITH A MOBILE DEVICE AND METHOD**
BEDRUCKTER ARTIKEL FÜR DRAHTLOSE KOMMUNIKATION MIT EINER MOBILEN VORRICHTUNG UND VERFAHREN
PRODUIT IMPRIMÉ POUR UNE COMMUNICATION PAR VOIE AÉRIENNE AVEC UN APPAREIL MOBILE ET PROCÉDÉ

(30) Priority: 09.02.2012 GB 201202299
(43) Date of publication of application: 17.12.2014
(73) Proprietor: Novalia Ltd, Cambridge Cambridgeshire CB5 8RE (GB)
(72) Inventor: STONE, Kate, Impington CB24 9NP (GB)
(74) Representative: Piotrowicz, Pawel Jan Andrzej
(86) International application number: PCT/GB2013/050265
(87) International publication number: WO 2013/117917

(56) References cited:
- WO-A1-03/098507
- WO-A1-2007/035115
- WO-A1-2010/094014
- WO-A2-93/17764
- CN-U- 201 566 247
- GB-A- 2 475 253
- GB-A- 2 478 325
- TW-A- 200 821 976
- US-A1- 2002 058 240
- US-A1- 2008 238 706
- US-A1- 2011 214 318

## Description

### Field of the Invention

The present invention relates to a printed article, such as a poster or point-of-sale display.

### Background

Electronic components are increasingly being incorporated into printed articles, such as books, posters and greeting cards, to allow printed articles to become more interactive.

For example, GB 2464537 A describes a book whereby a story can be read in different ways because user input can affect the narrative and/or a different narrative can be presented to the reader each time the book is opened.

GB 2475253 A describes a poster which can be custom made and used to control a presentation on a display.

TW 2008 21976 A describes a smart electronic poster system which automatically transmits various media information, such as text, a voice message, a photo file or video files, to a client about a product.

WO 9317764 A2 describes a toy or educational device wherein sensor means are provided associated with a substrate. When the substrate is touched or a playing piece is located on the substrate, the position of the finger or playing piece are determined. In response to this a voice synthesizer or other device which produces a predetermined sound may be activated.

US 2002058240 A1 describes a remote control including a base and an insert that is attached in a detachable manner to the base. The base includes a remote control circuit, a button coupled to operate the remote control circuit and a fastener capable of holding the insert. The insert includes a printed publication (such as a card, a sheet of paper or a booklet). The insert can carry a predetermined pattern that can be sensed by a sensor during mounting of the insert on the base. The base transmits, in the remote control signal, a number determined from the predetermined pattern to indicate to the host device the insert currently in the base.

US 2011214318 A1 describes a wireless greeting card or post card including memory for storing digital content and a wireless transceiver for transferring the digital content to a recipient user device in close proximity to the wireless paper stock card.

US 2008238706 A1 describes apparatus and a method for causing a printed display to become interactive when a person points to part of the display. Behind the display a customised layout of capacitative proximity sensors printed with conductive inks on to a low-cost disposable, replaceable substrate in alignment with visually significant features of the display is connected to proximity-sensing circuitry. Audio-visual or multimedia responses using pre-recorded or synthesised information are reproduced in event of a selection.

GB 2478325 A describes an article comprises a substrate having indicia printed thereon and an electronic device having at least one input device and at least one output device. The indicia include one or more directions or questions in response to which a user provides input to the electronic device via the at least one input device.

CN 201566247 U discloses a self-service menu with a display screen, which comprises a front cover, a bottom cover and an internal page body consisting of a plurality of pages of menus capable of being turned. The internal page body is hollowed with a notch penetrating through the whole integral page body, a display screen body with matching shape and used for self-service ordering is arranged in the notch, the display screen body is fixed onto the bottom cover and comprises a microprocessor, a touch display screen and a plurality of control buttons, wherein the touch display screen and the control keys are respectively connected with the microprocessor. The internal page body is the conventional paper-made menu, shows dish information by printing and the like, the touch display screen can display more dish information, and the microprocessor and the control buttons can be used for counting amount of money and self-service ordering and the like. By aid of the structure, the self-service menu not only has functions of the conventional menu but provides more dish information by the display screen body, and can check serving time, count amount of money, realize self-service order and the like.

WO 2007/035115 A1 discloses an apparatus and a method for causing a printed display (poster, placard or promotional flier) to become interactive when a person points to part of the display. Behind the display a customised layout of capacitative proximity sensors printed with conductive inks on to a low-cost disposable, replaceable substrate (paper, plastic, cardboard) in alignment with visually significant features of the display is connected to proximity-sensing circuitry. Audio-visual or multimedia responses using pre-recorded or synthesised information are reproduced in event of a selection.

WO 2010/094014 A1 discloses an invention relating to a smart integration of dual architecture contact-less SIM into mobile device and describes the method of performing various economic transactions using the interactive poster more efficiently.

WO 03/098507 A1 discloses a device provided with a transmitter/receiver having a packet communication function and used as an ordering device for directly sending an order of a customer to the kitchen of a restaurant by touching a dish photograph or a menu attached to a panel with a finger. The device is a wireless tablet menu panel comprising a touch sensor having a matrix of contact parts, a sheet overlaid on the touch sensor, detecting means for detecting the pressed contact part of the touch sensor, communication means for transmitting a signal produced by the detecting means, and a secondary cell for operating the communication means and so forth. Menu items are indicated with an image and characters on the sheet. The correspondence between the menu items and the contact parts of the touch sensor is predetermined. When one of the menu items is pressed, the signal from the corresponding contact part is detected by the detecting means and sent to the communication means.

WO 2007/148111 A2 describes a method of making a book including interconnected electrical components, the method comprising the step of applying a conductive ink to a sheet of material to define a conductive track on the sheet from a point on the surface of the sheet to the edge of the sheet such that the conductive track extends beyond the edge of the sheet generally in the plain of the sheet to form an electrical connection point.

JP2004130658 A describes a book and a book recognition device, which can easily specify a given information and vary the given information in response to circumstances. The book is equipped with a page detecting means for detecting an open page and outputting its page number, a book identification number storing means, in which a uniquely identifiable book identification number is stored, and a short-distance communicating means, which gets a page number detected after the receipt of a question signal and, at the same time, reads a stored book identification number and ends an answer signal including the page number and the book identification number. The book recognition device is equipped with a short-distance communicating means, which sends a question signal on the book and, at the same time, receives the answer signal, a book identifying means for extracting the book identification number and the page number from the answer signal, an information processing means, which specifies a server providing information based on the book identification number and the page number so as to get information from the server, and an information outputting means for outputting the information gotten in the information processing means.

### Summary of the Invention

According to a first aspect of the present invention there is provided a printed article comprising a substrate, at least two touch- or proximity-sensitive switches supported on the substrate, a processor configured to generate, in dependence upon actuation of the switch, a message, and a wireless interface configured to transmit the message wirelessly, e.g. by low power Bluetooth (RTM), wherein the processor is configured so that the message includes information to allow a mobile device to download instructions for interpreting signals transmitted by the printed article and the message includes at least one switch identifier, each switch identifier identifying a respective actuated switch.

Thus, the printed article can be employed to control a mobile device and to use the mobile device as an agent for rendering content, e.g. audio, to enhance the functionality of the printed article. For example, a user can touch an image on a poster and cause the mobile device to retrieve and play an audio clip (e.g. speech and/or sound effect) corresponding to an image displayed on the poster. The audio clip may already be stored locally on the mobile device or may be stored remotely on a server. Thus, content need not be stored at or transmitted by the printed article.

Additionally or alternatively, the printed article can be employed to collect information and to transmit the information (or data generated from the information) wirelessly to a remote location.

The switch may comprise conductive ink, such as silver-, copper- or carbon-based ink. The switch may comprise conductive foil. Thus, the touch- or proximity-sensitive switch can be easily and cheaply incorporated into the printed product, for example, by printing or foil stamping.

The printed article can be used to provide more complex forms of control.

The substrate may comprise paper or card, and/or plastic. The substrate may comprise a laminate.

The wireless interface may be compatible with Bluetooth (RTM) and/or IEEE 802.11 (i.e. WiFi).

The printed article may comprise a poster or a point-of-sale display. The point-of-sale display may take the form of shelf edging, a dummy pack (i.e. an empty pack), a display pack, a display stack, a mobile, a poster or a banner.

The message may control a mobile application. The message may control a web browser.

The printed article may be configured to establish secure communication with a mobile device, e.g. by transmitting (and optionally receiving) encrypted or encoded signals. However, information may be transmitted unencrypted.

The message may include an article identifier identifying the printed article. The same switch may be actuated more than once. The message may include information about one or more actuated switches, such as information about an order in which switches are actuated or time(s) at which switch(es) are actuated. The message may include at least one command, for example, for moving a pointer or focus on a display. The message may include at least one complex command, for example, comprising multiple commands and/or computer code, such as a script or applet. The message may include at least one content identifier, each content identifier indentifying respective content. The message may include at least one universal resource identifier (URI), such as an IP address. The URI may identify a source of content. The message may include information about content. The message may include a target identifier, for example, identifying a device to which content, computer code and/or other data is to be transmitted. The message may include a timestamp. The message may comprise more than one message.

The printed article may comprise a code visible to a user, such as a quick response (QR) code.

According to a second aspect of the present invention there is provided a system comprising a printed article, a mobile device which is in wireless communication with the printed article and a server for providing content to the mobile device.

The device is preferably connected to another network.

The mobile device may be a device such as smart phone, tablet computer or other form of hand-held device. The device may comprise a wireless access node.

The device may be configured, in response to receiving a message from the printed article, to retrieve content from an external source, such as a server, or to transmit data to an external source, such as a server.

The device may be configured, in response to an initial message transmitted by the printed article, to retrieve settings for interpreting further messages transmitted by the printed article in response to actuation of switch(es). The initial message may comprise an identifier (e.g. a name) and/or an address (e.g. a media access control address). The device may comprise an application for responding to the message and to retrieve the settings. The system may further comprise a server storing the settings.

The system comprises a server for providing content to the mobile device. Thus, content need not be stored at or transmitted by the printed article. The mobile device may be capable of storing and/or retrieving, and then playing a large volume of data.

The content may include audio content, for example, speech, music or sound effect. The content may include image content, such as a picture or photo, and/or video content.

According to a third aspect of the present invention there is provided a method comprising a printed article comprising a substrate, at least two touch- or proximity-sensitive switches supported on the substrate, a processor configured to generate a message, and a wireless interface configured to transmit the message wirelessly, the method comprising generating, in dependence upon actuation of the switch, a message including information to allow a mobile device to download instructions for interpreting signals transmitted by the printed article and at least one switch identifier identifying a respective actuated switch, and transmitting the message wirelessly.

The method may further comprise a mobile device receiving the message and, when the message is the first message received by the mobile device from the printed article, using the message contents to download instructions for interpreting signals transmitted by the printed article from a server; and the mobile device responds to the message based on the message contents and the instructions downloaded from the server.

The mobile device may comprise an application which is configured, in response to receiving the initial message, to retrieve the information (or settings) from the remote server. The application may be configured, in response to receiving the further message, to cause the device to respond to the further message in dependence on the information (or settings).

### Brief Description of the Drawings

Certain embodiments of the present invention will now be described, by way of example, with reference to the accompanying drawings in which:
Figure 1 illustrates a system including a printed article which is capable of receiving user input and wirelessly communicating with another device;
Figure 2 is a block diagram of a microcontroller included in the printed article shown in Figure 1;
Figure 3 is a block diagram of the mobile device shown in Figure 1;
Figure 4 illustrates a printed article transmitting a message to another device;
Figure 4a illustrates the message shown in Figure 4;
Figure 5 illustrates a printed article transmitting a message to a mobile device;
Figure 6 is a block diagram showing flow of data between the printed article and mobile device shown in Figure 5;
Figure 7 illustrates a printed article transmitting a message to a mobile device and the mobile device retrieving content;
Figure 8 is a block diagram showing flow of data between the printed article, the mobile device and server shown in Figure 7;
Figure 9 illustrates a printed article transmitting a message to a mobile device, the mobile device retrieving content and forwarding the content to the printed article;
Figure 10 is a block diagram showing flow of data between the printed article, the mobile device and server shown in Figure 9;
Figure 11 illustrates a printed article transmitting a message to a mobile device or routing node, the mobile device or routing node requesting content and a server forwarding the content to another device;
Figure 12 is a block diagram showing flow of data between the printed article, the mobile device or routing node, the server and the other device shown in Figure 11;
Figure 13 is a block diagram showing flow of data between one or more printed articles, a logging node and a server;
Figure 14 is a block diagram showing flow of data between a printed article, a mobile device and a server;
Figure 15 is a back view illustrating a unit which can be clamped to a printed article;
Figures 16 and 17 are side views illustrating the unit in Figure 15 when clamped and unclamped respectively.

### Detailed Description of Certain Embodiments

### Wireless system 1

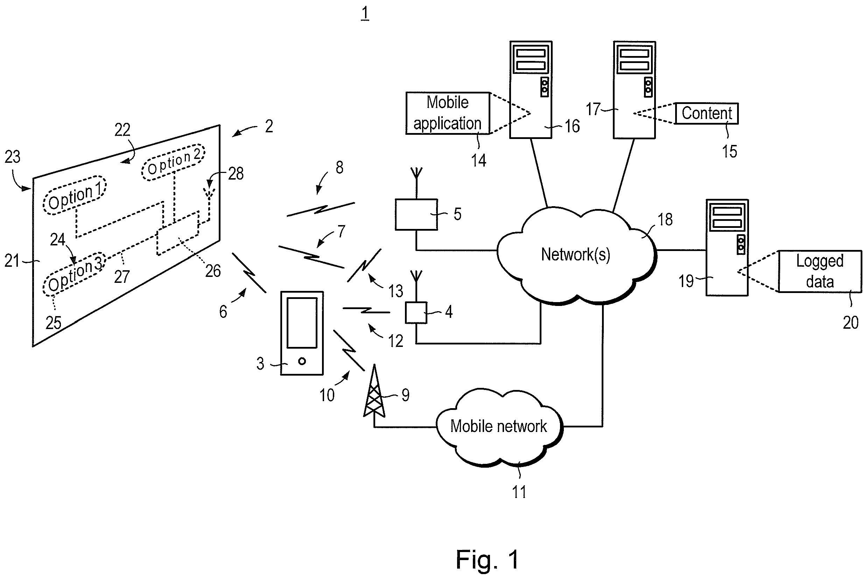

Referring to Figure 1, a wireless system 1 is shown.

The wireless system 1 comprises at least one printed article 2 and at least one other device 3, 4, 5. The or each printed article 2 (hereinafter only one printed article 2 is referred to) is capable of receiving user input, for example through capacitive touch sensing, and wirelessly communicating with a devices 3, 4, 5 via respective wireless links 6, 7, 8. The printed article 2 preferably communicates using a low-power, short-range (< 100 m) wireless communications technology, such as low-power (v4.0) Bluetooth.

The at least one other device 3, 4, 5 may include a mobile device 3, a routing node 4 and/or a logging node 5.

The mobile device 3 is capable of wirelessly communicating with a base station 9 via a mobile communications link 10. The base station 9 is connected to a mobile communications network 11. The mobile device 3 may also be capable of wirelessly communicating with the routing node 4 via a wireless link 12 and/or with the logging node 4 via a wireless link 13.

The mobile device 3 can download a mobile application 14 (colloquially often referred to as an "app") and content 15 from first and second servers 16, 17 respectively via the routing node 4 and one or more networks 18.

The logging node 5 can communicate with a third server 19 via the one or more networks 18 to store logged data 20.

Other servers (e.g. web servers) are connected to the network 18.

### Printed article 2

Referring still to Figure 1, the printed article 2 takes the form of a poster (e.g. mounted on a wall or other vertical or non-horizontal surface, or mounted or spread on a table top of other generally horizontal surface). The printed article 2 may be a point-of-sale display and may take the form of shelf edging, a dummy pack (i.e. an empty pack), a display pack, a display stack, a mobile, a poster or a banner.

The printed article 2 includes a sheet-like, opaque substrate 21 having first and second faces 22, 23. The substrate 21 can be formed from paper, card, plastic or other flexible or non-flexible material. A first (front) face 22 of the substrate 21 is provided with text, icons, graphic, images and/or other indicia 24. A second (reverse) face 23 of the substrate 21 is provided with conductive pads 25 which provide proximity-sensitive switches. The conductive pads 25 are connected to a controller 26 via conductive tracks 27. The controller 26 has an antenna 28 which can be provided on the second face 23 of the substrate 21. The controller 26 takes the form of a microcontroller.

The controller 26 and/or other components may be supported by and attached to (e.g. by soldering) to a printed circuit board (not shown) which is attached to the substrate 21, for example using conductive glue or tape. The controller 26 and/or other components may be directly attached to the substrate 21, for example using conductive glue or tape.

In some embodiments, two or more sheet-like substrates may be used. A first substrate (not shown) may support the indicia 24. If the first substrate is transparent, the indicia 24 can be formed on a reverse side. A protective layer (not shown) can be provided on the first substrate. A second substrate (not shown) can be used to support the conductive pads 25 and conductive tracks 27. A third substrate (not shown) can be interposed between the first and second substrates.

The conductive pads 25 and/or the conductive tracks 27 comprise conductive ink, for example silver-based conductive ink, and may be formed using a printing process, e.g. inkjet printing, gravure etc. onto the substrate 21. However, conductive pads 25 and/or conductive tracks 27 may comprise foil and may be formed by hot-foil stamping. The conductive tracks 27 typically have a resistance less than 100 kΩ.

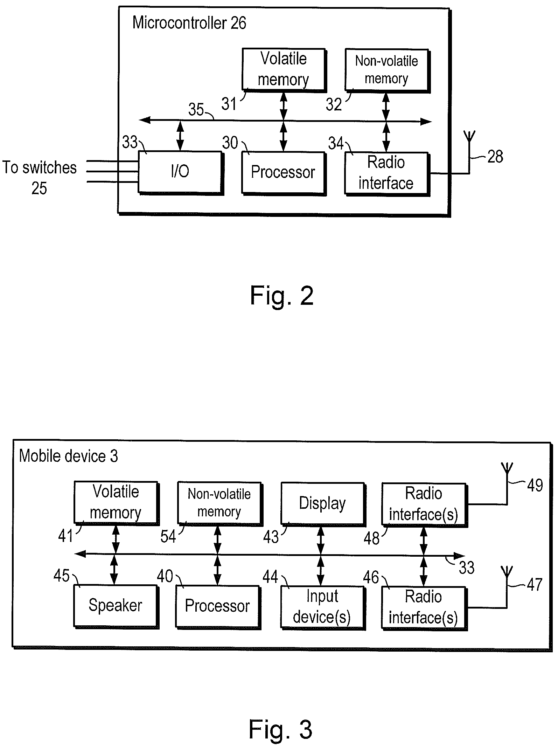

Referring also to Figure 2, the microcontroller 26 comprises a processor 30, volatile memory 31, non-volatile memory 32 (e.g. Flash), an input/output module 33 and a radio interface module 34 connected by a bus system 35. Other modules and peripheral modules may be provided. Furthermore, a single microcontroller need not be used. For example, a separate capacitive sensing module and/or a separate radio interface module may be used. The radio interface module 35 conforms to Bluetooth (RTM). The printed article 2 supports a battery, solar cell or other power source.

Referring also to Figure 3, the mobile device 3 may take the form of a smart phone, tablet computer or other form of hand-held device having wireless connectivity. The mobile device 3 includes a processor 40, volatile memory 41, non-volatile memory 42, a display 43, input device(s) 44, a speaker 45, a first radio interface module 46 having a respective antenna 47 and a second radio interface module 48 having a respective antenna 48 connected by a bus system 49. A microphone (not shown), camera (not shown) and other devices or modules may be provided. The display 43 may take the form of a touch display and, thus, incorporate an input device.

The first radio interface module 46 provides Bluetooth, WiFi, or some other form of short-range wireless connectivity. Thus, the printed article 2 can communicate with the mobile device 3 via a wireless connection. The second radio interface module 48 provides mobile telecommunications connectivity (such as GSM, EDGE, 3G and/or 3G+ connectivity).

The routing node 4 can take the form of a wireless access node. The network(s) 18 may include a (wired or wireless) local area network and/or a wide area network. The network(s) 18 may include a plurality of connected networks.

The logging node 4 can take the form of a server (not shown) connected to a wireless access node (not shown).

The first server 16 can provide a mobile application 14 to the mobile device 3. The server 16 may locally store the application 14 or may fetch the application 14 from a remote server (not shown) and serve the application 14 to the mobile device 3.

The second server 17 can provide content 15, for example audio content, to the mobile device 3. The server 17 may locally store content 15 or may fetch a mobile application from a remote server (not shown) and serve the content to the mobile device 3.

The printed article 2 can be used can be used in a number of different ways.

For example, the printed article 2 can control the mobile device 3 and use the mobile device 3 as an agent for controlling, retrieving and/or rendering content, e.g. audio, to enhance the functionality of the printed article 2.

The printed article 2 may be used to record user preferences and forward data, for example, via the mobile device 3 or the logging node 5.

These and other ways of employing the printed article 2 will now be described in more detail.

### Use of the printed article 2 to control retrieval and/ or rendering of content

Referring to Figures 1 to 6, a method of using the printed article 2 to control the retrieval and/or rending of content using a mobile device 3 or node 4 or other similar forms of control will now be described.

A user in possession of the mobile device 3 may, when faced with the printed article 2, download a dedicated mobile application 14. The printed article 2 may display the name of the application 14 and/or provide details of or a link or code for downloading of the application 14. Thus, the mobile device 3 may download the mobile application 14 from the first server 16 (step S1). The mobile application 14 is started (step S2). The application need not be a dedicated mobile application, but can be a general-use application 14, such as a web browser, which may be preinstalled on the mobile device 3. In the case of a node 4, suitable software may already be installed.

The printed article 2 and a device 3, 4 establish a wireless connection 10 (step S3). In the case of a mobile device 3, in some embodiments, the printed article 2 and mobile device 3 establish a wireless connection 6 before the mobile device 3 downloads or starts the application 14.

The user may start interacting with the printed article 2, for example, by touching the printed article 2 and actuating one or more switches 25 (step S4).

The controller 26 interprets actuation of a switch 25, actuation of a combination of switches 25 or actuation of a sequence of switches 25, identifies a control message 50 and transmits one or more control messages 50 wirelessly to the mobile device 3 or node 4 (step S5).

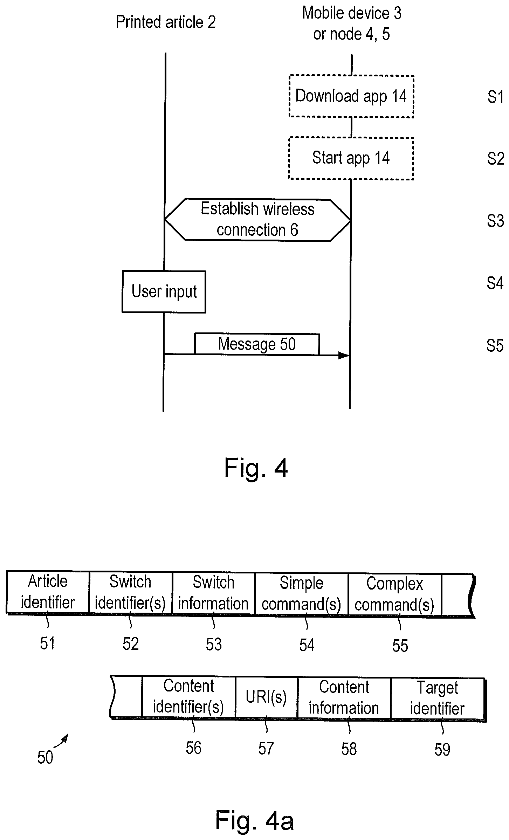

Referring in particular to Figure 4a, the message 50 is described in more detail.

The message 50 may include one ore more parts 51, 52, 53, 54, 55, 56, 57, 58, 59.

The message(s) 50 may include an article identifier 51 identifying the article.

The message(s) 50 may include switch identifier (s) 52 identifying which switch 25 or switches 25 have been pressed. The message(s) 50 may include other switch-related information 53 for example, identifying an order in which the switches 25 have been pressed and/or time(s) at which the switches 25 were pressed.

The message(s) 50 may include simple command(s) 54, for example which may be used to control a cursor or focus in an application, and/or complex command(s) 55, for example in the form of a computer code, such as an applet or script.

The message(s) 50 may include identifier(s) 56 identifying content (e.g. audio content) and/or uniform resource identifier(s) 57 identifying a location at which content is stored and/or other content-related information 58.

The message(s) 50 may include target identifier(s) 59 for identifying destination(s) to which content, computer code and/or data is to be sent.

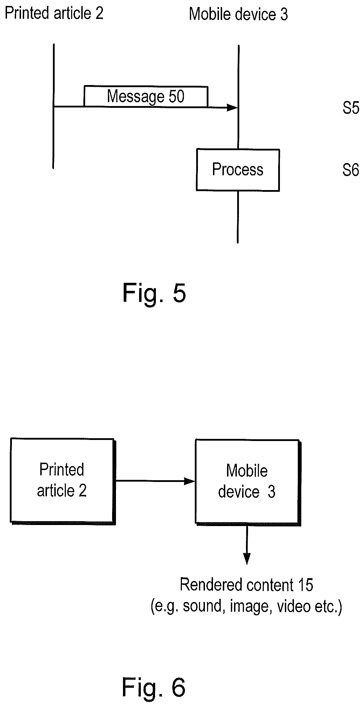

Referring in particular to Figures 5 and 6, the message(s) 50 is (are) passed to the mobile application 14 which executes any instructions contained in the message(s) 50 (step S6).

For example, the message(s) 50 may include a command 54 to render particular content 15 identified by the identifier 56. In this case, the content 15 is stored in the mobile device 3 and so the mobile device 3 can act upon the instruction and render the content 15.

This arrangement can be used, for example, to enhance the functionality of the printed article 2. For example, in a museum setting, a user can press a switch 25 on a poster 2 and the poster 2 can instruct the mobile device 3 to play music or pre-recorded commentary.

Additionally or alternatively, this can be used to record user selection and/or provide information which can be displayed. For example, in a shop setting, a user can press a switch 25 on a point-of-sale display 2. This can be used to identify an item which the user wishes to purchase and to display additional information, such as images of the item in use, stock availability etc.

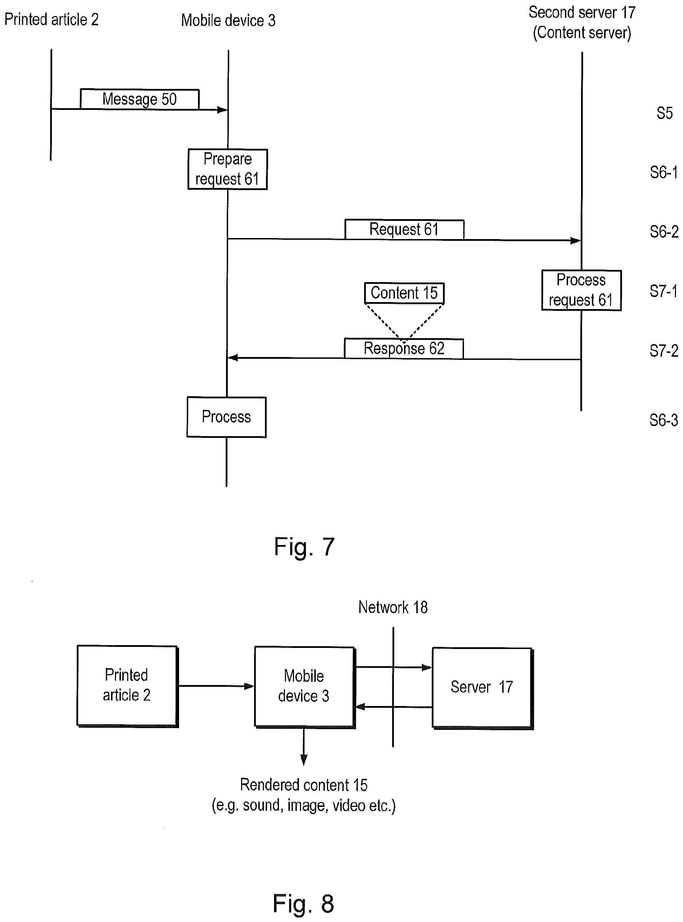

In some examples, the mobile device 3 may need to retrieve content, an application and/or other data, as will now be described in more detail:
Referring in particular to Figures 7 and 8, the message(s) 50 is (are) passed to the mobile application 14 which executes any instructions contained in the message(s) 50 (step S6). However, in this case, the message 50 may instruct or require the mobile application 14 to download content 15. For example, the message 50 may include the name of the content and/or a uniform resource identifier (URI).

The controller 26 interprets actuation of a switch 25, actuation of a combination of switches 25 or actuation of a sequence of switches 25, prepares and transmits control message 50(s) wirelessly to the mobile device 3 (step S5). The message(s) 50 is (are) passed to the mobile application 14 which identifies that it requires content from, for example, the second server 17 and prepares a request 61 (step S6-1). The mobile device 3 transmits the request 61 to the second server 17 (step S6-2).

The server 17 processes the request 61 (step S7-1) and sends a response 62 which includes content 15 (step S7-2). The mobile application 14 renders the content 15 (step S6-3). In other examples, computer code or other data may be requested, instead of content.

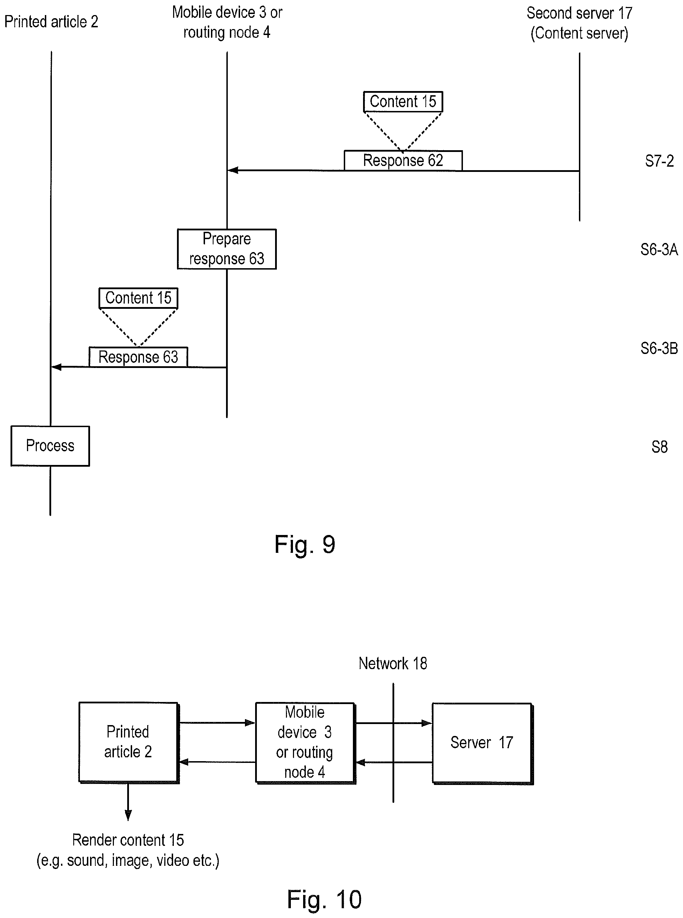

In certain examples, the mobile device 3 or node 4 may retrieve content, an application and/or other data but, rather than use the retrieved resource itself, the mobile device 3 or node 4 may pass it on to a target, namely the printed article, as will now be described:
Referring still to Figure 7 and referring also to Figures 9 and 10, the mobile device 3 receives a message 50 (step S5), prepares and sends a request 61 (step S6-1 & S6-2) and receives a response 62 (step S7-2) as described earlier.

However, instead of rendering the content 15, the mobile device 3 prepares a response 63 (step S6-3A) and transmits the response 63 to the printed article 2 (step S6-3B). The printed article 2 renders the content 15 (step S8).

In some examples, the mobile device 3 may already store the requested content 15 and so there may be no need to request the content from the server 17.

Furthermore, in certain examples, the user may be prompted to provide some input when preparing the response 63, for example, to choose between more than one set of content, to enter user-related information (e.g. name) or user choices (e.g. playback volume) etc.

In some examples, the routing node 4 may take the place of the mobile device 3, i.e. the user need not use a device in their possession.

This arrangement can be used, for example, to enhance functionality of the printed article 2 even further. For example, in a museum setting, a user can press a switch 25 on a poster 2 and the poster 2 can instruct the mobile device 3 or routing node 4 to provide it with music or pre-recorded commentary. Once it receives the content from the mobile device 3 or routing node 4, the poster 2 can play the music or commentary.

In some examples, the mobile device 3 or routing node 4 request content, computer code and/or other data and the server 17 may send the requested resource to a target directly, such as to another mobile device 3 or, in the case of a routing node 4, to a mobile device 3, as will now be described:

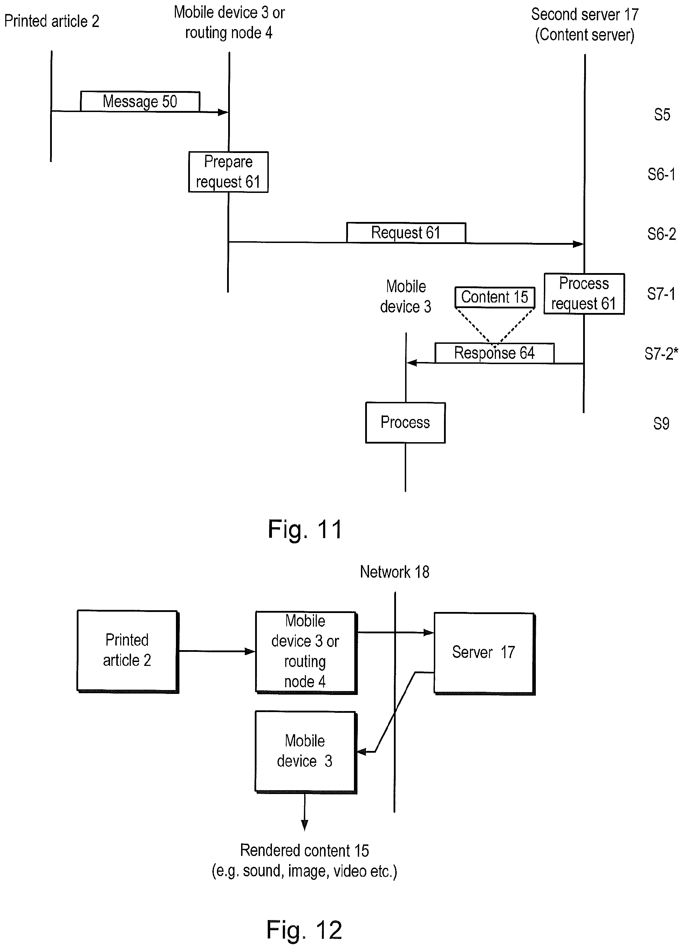

Referring still to Figure 7 and referring also to Figures 11 and 12, the mobile device 3 receives a message 50 (step S5) and prepares and sends a request 61 to the server 17 (step S6-1 & S6-2).

The request 61 includes the identity of the target, for example, in the form of an IP address. Thus, the server 17 prepares and sends a response 64 (step S7-2*) to another device. The other device renders the content (step S9).

Interaction between the printed article 2 and the mobile device 3 (or routing node 4) can be terminated in any number of different ways. For example, the user may select to unpair the mobile device 3 and printed article 2. A connection may be dropped by ending the app.

The printed article 2 can be used to send successive sets of message(s) 50 which are handled in different ways. For example, a user may press switches on the same poster and cause content to be obtained from different sources and/or rendered at different targets. For example, a first time the user presses switches, the mobile device 3 may render content which is already stored in the mobile device 3. A second time the user presses switches, the same mobile device 3 may retrieve content from a remote source and then render it. A third time the user presses switches, the mobile device 3 may retrieve content from a remote source and then forward it to the printed article 2. Other permutations and combinations are possible.

Furthermore, the printed article 2 can be used to send successive sets of message(s) 50 to different mobile devices 3. For example, a first user can interact with a poster 2 and have content rendered on their mobile device 3 and a second, different user with a different mobile device 3 can subsequently interact with the poster 2 and have content rendered on their mobile device 3 or elsewhere.

Moreover, different printed articles 2 may be wireless connected to the same mobile device 3 simultaneously and/or successively. For example, the user can activate switches on different posters and content may be rendered on the same mobile device 3.

An arrangement in which the printed article 2 is employed to control the mobile device 3 (or routing node 4) and to use the mobile device 3 (or routing node 4) as an agent for rendering content to enhance the functionality of the printed article 2 can have one or more advantages.

The printed article 2 need not transmit the content 15, e.g. an audio clip, directly to mobile device 3. Expressed differently, the mobile device 3 does not receive, from the printed article 2, content for rendering. Instead, the printed article 2 can send an instruction which identifies the content 15 to the mobile device 3 and the mobile device 3 retrieve the content 15.

In this way, the mobile device 3 can independently retrieve content 15 via a high-bandwidth wireless connection and render the content 5. Thus, in some embodiment, the required content 15 need not be stored at or transmitted by the printed article 2. Therefore, in such embodiments, the controller 26 can be simplified and be provided with minimal processing power, memory and/or wireless connectivity and so help reduce the cost of the printed article 2.

Moreover, content 15 can be updated without needing to access the printed article 2. For example, old content (such as a segment of speech or other audio) can be updated with new content simply by updating the content 15 at the server 17 or other server (not shown). This can be done from a remote location.

Furthermore, content 15 can be provided in a wider range of formats, with different levels of compression, different levels of encryption, and/or different levels of digital right permission according to the capability of the device 3. Thus, the controller 26 need not store content in different formats, file size etc. Moreover, the mobile device 3 can obtain data from a trusted source. The use of protected content can also be controlled.

### Use of the printed article 2 for information logging

Referring to Figures 1, 4a and 13, a method of using the printed article 2 to record user preferences and to send data to a logging node 5 will now be described.

As explained earlier, a user can interact with the printed article 2, for example, by touching the printed article 2 and actuating one or more switches 25. The controller 26 interprets actuation of a switch 25, actuation of a combination of switches 25 or actuation of a sequence of switches 25 and transmits a suitable message 50.

In this example, the message 50 includes an article identifier 51, switch identifiers 52 and, optionally, switch information 53 which include timestamp(s). The message 50 is transmitted to a logging node 5 which stores the message 50 together with other messages from the same printed article 2 and/or other printed articles 2.

The messages 50 or data generated from the messages (such as statistics) are transmitted to the third server 19. The logging node 5 may transmit the messages or data on receipt of a message. Additionally or alternatively, the logging node 5 may store messages 50 and transmit the messages or data according to a schedule and/or on demand.

This arrangement can be used to gather information about user preferences. For example, the printed article 2 may be a point-of-sale display. The point-of-sale display 2 may invite the user to give their opinion or provide feedback about a product or service. Several point-of-sale displays 2 may be located in store which shares a logging node 5.

The point-of-sale display which is capable of receiving user input and transmit wirelessly can be easily and cheaply manufactured. Moreover, such displays can be easily installed.

More complex forms of information logging may be carried out.

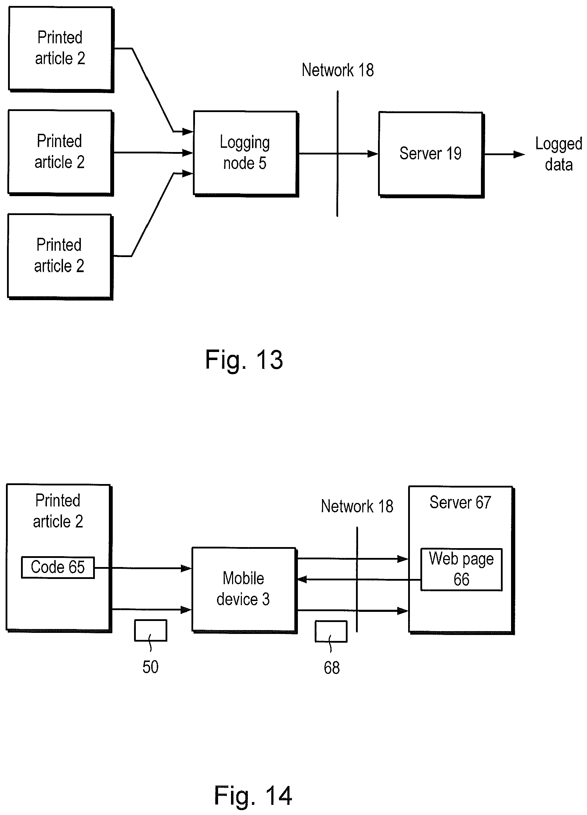

Referring to Figure 14, a code 65, for example, in the form of an alphanumeric code or Quick Response (QR) code, is presented on the printed article 2, i.e. printed on the substrate 21 (Figure 1).

A user enters the code 65 into the mobile device 3 or the mobile device 3 reads the code 65, for example, using an in-built camera. The code 65 directs the mobile device 3 to access a web page 66 retrieved from a web server 67. The user presses one or more switches 25 and the controller 26 interprets actuation of the one ore more switches 25 and transmits a message 50. The message 50 may include an article identifier 51, switch identifiers 52 and, optionally, switch information 53 which include timestamp(s).

The mobile device 3, in turn, transmits a message 68 to the logging server 19 or web server 67. The message 68 may include information contained in the message 50 from the printed article 2 and/or information contained in code 65. The mobile device 2 may invite the user to add additional information (such as name and other personal details) and/or to request permission send information stored on the device 2 (such as IP address) to the server 19, 67.

This arrangement can be used to gather information about user preferences. For example, the printed article 2 may be a poster which may offer a discount. Thus, the user can use the code 65 to go to a website and use the poster to provide user input. User input via the poster 2 can add interest, may provide additional useful information (such as detailed location) and/or may allow user input which may be difficult to provide via a mobile device 3 with a small form factor.

In the embodiments described earlier, the controller 16 and/or other components may be attached to the substrate, for example using conductive glue or tape.

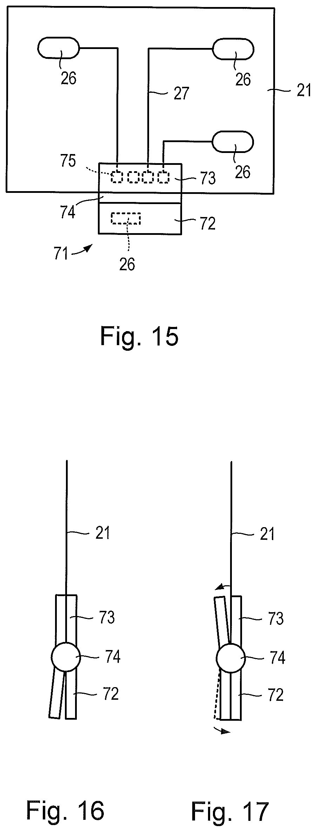

Referring to Figures 15 to 17, the controller 16 and/or other components (not shown) may be housed in a separate unit 71 which may be attached to the printed article 2 by clipping the unit 71 to the substrate 21 (which supports the switches 26). The other components may include a speaker and/or light emitting diodes.

In this example, the unit 71 comprises a pair of handles 72 and opposing clamping members 73 attached via a hinge 74. The unit 71 includes a spring or other biasing mechanism (not shown) which urges the clamping members 73 inwardly together. However, the clamping members 73 can be separated by pressing the handles 72 together.

Electrical contact pads (not shown) are arranged on an inner-facing surface (not shown) of one or both of the clamping members 73. The electrical contact pads are spaced so as to connect to corresponding pads 75 on the substrate 21. The electrical contact pads (not shown) are connected to the controller 26 and/or other components (not shown).

Figure 16 shows the unit 71 clamped to the substrate 21. Figure 17 shows the unit 71 when a user presses on opposing outer surfaces of e the handles 72 so as to cause the clamping members 73 to move apart to allow the unit 71 to positioned ready for clamping or to be unclamped from the substrate 21.

The unit can take different shapes and be different sizes. The unit can clamp onto the substrate using other, different mechanisms.

Using this arrangement, the controller 26 and other components can be removably attached to a printed article 2. This can help facilitate assembly and can allow more costly components to be re-used or temporarily attached.

### Examples of using a printed article 2 to control retrieval and/ or rendering of content

As explained earlier, a printed article 2, such as a poster, can be use to control retrieval and/or rending of content. Examples of using a printed article 2 will now be described in more detail.

Referring to Figure 1, the printed article 2 may take the form of a poster in a fast-food restaurant or other food or retail outlet. The poster advertises a special offer for a meal. A user enters the restaurant and sees the poster. The user has a mobile device 3, for example in the form of a smart phone, running a controller application 14.

Referring to also to Figure 7, the user decides that they like the special offer and wish to purchase the meal. The user touches the poster 2 thereby activating a proximity-sensitive switch 25. This causes the poster 2 transmits a message 50 to the mobile device 3. The message may include a name and media access control (MAC) address or other information for enabling the poster 2 and mobile device 3 to pair. The mobile device 3 may be arranged to pair with a poster 2 automatically (i.e. without any user input).

Using the message 50, for example using the name or a URI included in the message 50, the mobile device 3 sends a request 61 to a server, e.g. the server 17, and downloads instructions 15 for interpreting signals transmitted by the poster 2 in response to the user actuating switches 25.

The user touches a particular part of the poster 2 (for example, a picture of the meal on offer) to select the meal. The poster 2 then transmits a signal to a terminal (not shown) in the restaurant which informs staff that an order has been placed for that meal.

The user may hand over a payment (e.g. cash or card) or use a cashless payment system (for example employing the mobile device 2 and near-field communication) to pay for the meal. Alternatively, the user may configure their mobile device 2 to allow the restaurant to take or at least initiate a process of taking a payment. For example, the mobile device 2 may send payment information to the poster 2 which in turn forwards the payment information to the terminal (not shown) or a separate point-of-sale (POS) terminal (not shown) to initiate electronic payment. The mobile device 2 may send payment information to the terminal, e.g. directly or via the mobile network. For example, the payment information may include an account name and/or account details which allow the terminal to compete a first set of steps of a transaction. The transaction may be completed, for example, by the user entering a personal identification number (PIN).

The printed article 2 may take the form of an advertisement poster. The poster may advertise a music album or artist, game, movie or any other form of content.

The user decides that they would like to listen to some music. The user touches the poster 2 thereby activating a proximity-sensitive switch 25. In a similar way to that described earlier, activating a proximity-sensitive switch 25 causes the poster 2 to transmit a message 50 to the mobile device 3. The message may include a name and media access control (MAC) address or other information for enabling the poster 2 and mobile device 3 to pair. The mobile device 3 may be arranged to pair with a poster 2 automatically (i.e. without any user input).

Using the message 50, for example using the name or a URI included in the message 50, the mobile device 3 sends a request 61 to the server 17 and downloads instructions 15 for interpreting signals transmitted by the poster 2 in response to the user actuating switches 25.

The user touches a particular part of the poster 2 (for example, a name of a track) to select the track. The poster 2 then transmits a signal to mobile device 3. The signal 3 includes a link which allows the application 14 to download and play a clip of music.

The user can touch a particular part of the poster 2 to buy the track or album. The poster 2 sends a link to the server 17 (or another server) to download the music and receive payment.

In the processes just described, the user need not directly or contemporaneously use the mobile device 3. For example, the mobile device 3 may sit in a pocket or bag and not be handled by the user during the process.

Thus, a consumer (i.e. the user) and the provider may exchange data and information (such as one or more selection(s), one or more instruction(s), one or more pieces of information and/or one or more confirmation(s)) and effect an action and/or transaction using the printed article 2 and the mobile device 3. Data and information may simply pass through the mobile device 3 without the user using the mobile device 3.

The application 14 may be a general purpose application which can be used with different printed articles 2 in different settings and for different uses. As explained earlier, the mobile device 3 can receive a name and/or other information from a printed article 3 and can automatically download from the application server 16 or content server 17 any necessary information (which can be simply referred to as "settings") needed to interpret signals transmitted by the printed article 2 in response to keystrokes. However, the user can manually enable or select settings (for example, they may be transmitted by a printed article 2 or be one of a number of pre-loaded settings). The user can also transmit and store settings for private use or public use in a central server 16, 17. The server 16, 17 can store the settings together with a name. Thus, any user when presented with a printed article 2 can obtain a name (e.g. by the printed article transmitting the name) and can search for and retrieve settings from the central server 16, 17 using the name.

For example, the printed article 2 (a "printed piano") may show a piano keyboard with a switch associated with each key. Thus, when the user presses any key for the first time (or after a period of inactivity), the printed piano 2 transmits an initial message, for example, including the name "Piano". Thereafter (or for at least a given period of time thereafter), when the user presses a key, the printed piano 2 transmits a message including a switch identifier which identifies the key being pressed. Using the initial message, the mobile device 3 can retrieve settings for "Piano" from a server 16, 17. Once the mobile device 3 has these setting, it can interpret different switch identifier and play a (piano-sounding) note corresponding to the key being pressed.

Another printed article 2 (a "printed flute") may show a flute with a switch associated with each hole. By a similar process and using the same application 14, the user can pair their device with printed flute 2, retrieve settings and then play the printed flute.

### Modifications

It will be appreciated that many modifications may be made to the embodiments hereinbefore described.

For example, the printed article need not take the form of a poster or point-of-sale display, but can be a book or board game.

The wireless connection between the printed article and the mobile device need not be a radio connection, but can be, for example, an optical link or sound.

The controller and/or other components, such as a speaker, may be supported on separate substrate or frame.

The printed article may include or be connected to a camera or other (still or moving) image capturing device. The image capturing device may be connected to the controller and the controller may transmit image data.

The printed article may include or be connected to a temperature sensor. The temperature sensor may be connected to the controller and the controller may transmit temperature data.

The printed article may include or be connected to a positioning (or "locating") device (e.g. a GPS device) for determining the location of the printed article. The positioning device may be connected to the controller and the controller may transmit position data.

The printed article may additionally or alternatively include one or more touch- or proximity-sensitive array for providing array user input, e.g. x-y coordinates. The array may be connected to the controller and the controller may transmit array input data.

The printed article may be configured to communicate with another printed article. The printed articles may be configured to communicate directly via a wireless communication link. The printed articles may be configured to communicate directly via a network, e.g. network 18.

## Claims

1. A printed article (2) comprising:
a substrate (21);
at least two touch- or proximity-sensitive switches (25) supported on the substrate;
a processor (26) configured to generate, in dependence upon actuation of the switch, a message (50); and
a wireless interface (28) configured to transmit the message wirelessly;
wherein the processor is configured so that the message includes information to allow a mobile device (3) to download instructions (15) for interpreting signals transmitted by the printed article and the message includes at least one switch identifier, each switch identifier (52) identifying a respective actuated switch.

2. A printed article according to claim 1, wherein the switch comprises conductive ink or conductive foil.

3. A printed article according to any preceding claim, wherein the substrate comprises paper or card, or plastic.

4. A printed article according to any preceding claim, wherein the wireless interface is compatible with Bluetooth.

5. A printed article according to any preceding claim, wherein the wireless interface is compatible with IEEE 802.11.

6. A printed article according to any preceding claim, wherein the printed article comprises a poster, or a point-of-sale display.

7. A printed article according to any preceding claim, wherein the message controls a mobile application (14), or a web browser.

8. A printed article according to any preceding claim, wherein the message includes an article identifier (51) identifying the article.

9. A printed article according to any preceding claim, wherein the message includes at least one command (54), or the message includes at least complex command (55), for example, comprising multiple commands and/or computer code, or the message includes at least one content identifier (56), each content identifier indentifying respective content (15), or the message includes at least one universal resource identifier (57), or the message includes information about content (58), or the message includes a target identifier (59).

10. A printed article according to any preceding claim, further comprising a code (65) which is visible to a user.

11. A system (1) comprising:
a printed article according to any preceding claim;
a mobile device in wireless communication with the printed article;
a server (17)for providing content to the mobile device.

12. A system according to claim 11, wherein the mobile device is configured to run a program which is controllable by a user operating the printed article.

13. A system according to claims 11 or 12, wherein the mobile device is configured, in response to receiving a message from the printed article, to retrieve or send data to or from an external source.

14. A method comprising:
providing a printed article (3) according to claims 1-10 which comprises a substrate(21), at least two touch- or proximity-sensitive switches (25) supported on the substrate, a processor (26) for generating a message (50) and a wireless interface (28) for wirelessly transmitting the message wirelessly, generating, in dependence upon actuation of the switch, the message including information to allow a mobile device (3) to download instructions (15) for interpreting signals transmitted by the printed article and at least one switch identifier (52) identifying a respective actuated switch; and
transmitting the message wirelessly.

15. A method according to claim 14, the method further comprising:
providing a mobile device receiving the message and, when the message is the first message received by the mobile device from the printed article, using the message contents (51, 52, 53, 54, 55, 56, 57, 58, 59) to download instructions for interpreting signals transmitted by the printed article from a server (17); and
the mobile device responds to the message based on the message contents and the instructions downloaded from the server.

## Patentansprüche

1. Bedruckter Artikel (2), umfassend:
ein Substrat (21);
mindestens zwei Berührungs- oder Näherungsschalter (25), die auf dem Substrat getragen werden;
einen Prozessor (26), der so gestaltet ist, dass er abhängig von einer Betätigung des Schalters eine Nachricht (50) erzeugt; und
eine drahtlose Schnittstelle (28), die so gestaltet ist, dass sie die Nachricht drahtlos übermittelt;
wobei der Prozessor so gestaltet ist, dass die Nachricht Informationen enthält, die es einer mobilen Vorrichtung (3) ermöglichen, Anweisungen (15) zur Interpretation von durch den bedruckten Artikel übermittelten Signalen herunterzuladen, und wobei die Nachricht mindestens eine Schalterkennung enthält, wobei jede Schalterkennung (52) einen entsprechenden betätigten Schalter identifiziert.

2. Bedruckter Artikel nach Anspruch 1, wobei der Schalter leitfähige Tinte oder leitfähige Folie umfasst.

3. Bedruckter Artikel nach einem der vorstehenden Ansprüche, wobei das Substrat Papier oder Karton oder Kunststoff umfasst.

4. Bedruckter Artikel nach einem der vorstehenden Ansprüche, wobei die drahtlose Schnittstelle Bluetooth-kompatibel ist.

5. Bedruckter Artikel nach einem der vorstehenden Ansprüche, wobei die drahtlose Schnittstelle IEEE 802.11-kompatibel ist.

6. Bedruckter Artikel nach einem der vorstehenden Ansprüche, wobei der bedruckte Artikel ein Poster oder ein Point-of-Sale-Display umfasst.

7. Bedruckter Artikel nach einem der vorstehenden Ansprüche, wobei die Nachricht eine mobile Applikation (14) oder einen Webbrowser steuert.

8. Bedruckter Artikel nach einem der vorstehenden Ansprüche, wobei die Nachricht eine Artikelkennung (51) enthält, welche den Artikel identifiziert.

9. Bedruckter Artikel nach einem der vorstehenden Ansprüche, wobei die Nachricht mindestens einen Befehl (54) enthält, oder wobei die Nachricht mindestens einen komplexen Befehl (55) enthält, der zum Beispiel mehrere Befehle und/oder Computercode umfasst, oder die Nachricht enthält eine Inhaltskennung (56), wobei jede Inhaltskennung einen entsprechenden Inhalt (15) identifiziert, oder wobei die Nachricht mindestens einen einheitlichen Bezeichner für Ressourcen (57) enthält, oder wobei die Nachricht Informationen über den Inhalt (58) enthält, oder wobei die Nachricht eine Zielkennung (59) enthält.

10. Bedruckter Artikel nach einem der vorstehenden Ansprüche, der ferner einen für einen Benutzer sichtbaren Code (65) umfasst.

11. System (1), umfassend:
einen bedruckten Artikel nach einem der vorstehenden Ansprüche;
eine mobile Vorrichtung, die sich in Funkübertragungsverbindung mit dem bedruckten Artikel befindet;
einen Server (17) zur Bereitstellung von Inhalten an die mobile Vorrichtung.

12. System nach Anspruch 11, wobei die mobile Vorrichtung zur Ausführung eines Programms gestaltet ist, dass durch einen den bedruckten Artikel bedienenden Benutzer gesteuert werden kann.

13. System nach Anspruch 11 oder 12, wobei die mobile Vorrichtung so gestaltet ist, dass sie als Reaktion auf den Empfang einer Nachricht von dem bedruckten Artikel Daten von einer externen Quelle abruft oder an diese sendet.

14. Verfahren, umfassend:
einen bedruckten Artikel (3) nach einem der Ansprüche 1 bis 10, der ein Substrat (21) umfasst, mindestens zwei Berührungs- oder Näherungsschalter (25), die auf dem Substrat getragen werden, einen Prozessor (26) zum Erzeugen einer Nachricht (50) und einer drahtlosen Schnittstelle (28) zur drahtlosen Übermittlung der Nachricht, die abhängig von der Betätigung des Schalters erzeugt wird, wobei die Nachricht Informationen enthält, die es einer mobilen Vorrichtung (3) ermöglichen, Anweisungen (15) zur Interpretation von durch den bedruckten Artikel übermittelten Signalen herunterzuladen, und mit mindestens einer Schalterkennung (52), die einen entsprechenden betätigten Schalter identifiziert;
drahtloses Übermitteln der Nachricht.

15. Verfahren nach Anspruch 14, wobei das Verfahren folgendes umfasst:
Bereitstellen einer mobilen Vorrichtung, welche die Nachricht abruft, und wenn die Nachricht die erste durch die mobile Vorrichtung von dem gedruckten Artikel empfangene Nachricht ist, Verwenden der Nachrichteninhalte (51, 52, 53, 54, 55, 56, 57, 58, 59) zum Herunterladen von Anweisungen zur Interpretation von durch den gedruckten Artikel übermittelten Signalen von einem Server (17); und
Ansprechen der mobilen Vorrichtung auf die Nachricht auf der Basis der Nachrichteninhalte und der von dem Server heruntergeladenen Anweisungen.

## Revendications

1. Article imprimé (2), comprenant :
un substrat (21) ;
au moins deux commutateurs (25) tactiles ou sensibles à la proximité supportés sur le substrat ;
un processeur (26) conçu pour générer, en fonction de l'actionnement du commutateur, un message (50) ; et
une interface sans fil (28) conçue pour transmettre le message sans fil ;
le processeur étant conçu de sorte que le message comprenne des informations pour permettre à un dispositif mobile (3) de télécharger des instructions (15) pour interpréter les signaux transmis par l'article imprimé et que le message comprenne au moins un identifiant de commutateur, chaque identifiant de commutateur (52) identifiant un commutateur actionné respectif.

2. Article imprimé selon la revendication 1, le commutateur comprenant une encre conductrice ou une feuille conductrice.

3. Article imprimé selon l'une quelconque des revendications précédentes, le support comprenant du papier ou du carton, ou du plastique.

4. Article imprimé selon l'une quelconque des revendications précédentes, l'interface sans fil étant compatible avec Bluetooth.

5. Article imprimé selon l'une quelconque des revendications précédentes, l'interface sans fil étant compatible avec IEEE 802.11.

6. Article imprimé selon l'une quelconque des revendications précédentes, l'article imprimé comprenant une affiche, ou un présentoir de point de vente.

7. Article imprimé selon l'une quelconque des revendications précédentes, le message commandant une application mobile (14), ou un navigateur web.

8. Article imprimé selon l'une quelconque des revendications précédentes, le message comprenant un identifiant d'article (51) identifiant l'article.

9. Article imprimé selon l'une quelconque des revendications précédentes, le message comprenant au moins une commande (54), ou le message comprenant au moins une commande complexe (55), par exemple, comprenant des commandes multiples et/ou un code informatique, ou le message comprenant au moins un identifiant de contenu (56), chaque identifiant de contenu identifiant le contenu respectif (15), ou le message comprenant au moins un identifiant de ressource universelle (57), ou le message comprenant des informations sur le contenu (58), ou le message comprenant un identifiant cible (59).

10. Article imprimé selon l'une quelconque des revendications précédentes, comprenant en outre un code (65) qui est visible par un utilisateur.

11. Système (1), comprenant :
un article imprimé selon l'une quelconque des revendications précédentes ;
un dispositif mobile en communication sans fil avec l'article imprimé ;
un serveur (17) permettant de fournir du contenu au dispositif mobile.

12. Système selon la revendication 11, le dispositif mobile étant conçu pour exécuter un programme qui peut être commandé par un utilisateur exploitant l'article imprimé.

13. Système selon la revendication 11 ou 12, le dispositif mobile étant conçu, en réponse à la réception d'un message de l'article imprimé, pour récupérer ou envoyer des données vers ou depuis une source externe.

14. Procédé comprenant les étapes consistant à :
fournir un article imprimé (3) selon les revendications 1 à 10 qui comprend un substrat (21), au moins deux commutateurs (25) tactiles ou sensibles à la proximité supportés par le substrat, un processeur (26) pour générer un message (50) et une interface sans fil (28) pour transmettre le message sans fil, générer, en fonction de l'actionnement du commutateur, le message comprenant des informations pour permettre à un dispositif mobile (3) de télécharger des instructions (15) pour interpréter les signaux transmis par l'article imprimé et au moins un identifiant de commutateur (52) identifiant un commutateur actionné respectif ; et
transmettre le message sans fil.

15. Procédé selon la revendication 14, le procédé comprenant en outre les étapes consistant à :
fournir un dispositif mobile recevant le message et, lorsque le message est le premier message reçu par le dispositif mobile à partir de l'article imprimé, utiliser le contenu du message (51, 52, 53, 54, 55, 56, 57, 58, 59) pour télécharger les instructions d'interprétation des signaux transmis par l'article imprimé à partir d'un serveur (17) ; et
le dispositif mobile répondant au message sur la base du contenu du message et des instructions téléchargées du serveur.
